# EUROPEAN PATENT APPLICATION

(11) **EP 0 653 828 A2**
(43) Date of publication of application: **17.05.1995**
(21) Application number: 94308343.6
(22) Date of filing: 11.11.1994
(51) Int. Cl.: H02K 7/04

(54) **Rotor for a miniature motor**

(30) Priority: 16.11.1993 GB 9323614
(71) Applicant: JOHNSON ELECTRIC S.A., CH-2300 La Chaux-de-Fonds (CH)
(72) Inventor: Wang, Patrick Shui-Chung, Repulse Bay (HK)
(74) Representative: Higgins, Michael Roger

(57) **Abstract**

A rotor for a miniature electric motor has a commutator and an armature mounted on a shaft 11. The commutator has a plurality of armature laminations including two end laminations 30, stacked together on the shaft 11 to form an armature core 12 having a plurality of poles 33 and an armature winding wound around the poles 33 and terminated on the commutator. The two end laminations 30 each have means for balancing the rotor in the form of projections 31 extending from adjacent the radially outer periphery 34 of the armature core 12. The rotor is balanced by bending or deforming radially selected projections 31 or parts thereof. The projections 31 may be divided into a number of fingers 36 to assist balancing. The desired degree of balance is achieved by bending selected projections 31 or parts thereof radially.

## Description

The present invention relates to a rotor for a miniature motor and in particular to a rotor incorporating means for balancing the rotor.

Known rotors for electric motors comprise a shaft and a stack of armature laminations mounted on the shaft and forming armature poles. Armature windings are wound around the armature poles and are connected to a commutator mounted on the shaft adjacent one end of the armature stack. Balancing of the rotor after assembly has normally been by one of two methods, either material such as an epoxy putty is added to the rotor generally on the windings to balance the rotor or material is removed from the radially outer peripheral surface of the armature stack using a cutting wheel. The material adding method is labour intensive while the material removing method can be automated.

One major problem with the material removal method is that for miniature motors, the amount of material to be removed to achieve balance is often minute and even if cutting wheels with a width of 1/8'' (3 mm) are used, they cannot be accurately controlled to remove such small amounts of material to achieve the desired degree of balance.

It is the purpose of the present invention to at least reduce the disadvantages of known methods of balancing rotors for miniature motors by providing a rotor incorporating balancing means. The balancing means avoids the need to add material to the rotor to balance the rotor or to grind or machine the rotor to remove material to balance the rotor.

This is achieved by providing a rotor in which the balancing means comprises each end lamination of the armature stack having peripheral portions extending from adjacent the radially outer periphery and arranged to be bent radially to balance the rotor.

In the days when steel was expensive and labour was cheap, there was a technique used to make the rotor appear to be longer. This involved the use of axially extending projections formed on the end laminations adjacent the radially outer peripheral surface of the armature core. These projections were called flux collectors and they acted to improve the magnetic coupling between the magnets and the armature core. These flux collectors were rigid and arranged to be spaced from the field magnets by a small air gap, the smaller the gap, the better the performance.

The present invention, in a simple embodiment, looks similar to the old flux rings but the purpose of the axially extending projections on the end laminations is to provide a convenient and simple means for dynamically balancing the rotor to within fine tolerances. This is achieved not by adding or removing material to out of balance portions of the rotor but by simply bending the projections or parts thereof radially to change the dynamic mass of the projections to counter the unbalance of the rotor. This has the same effect as adding or removing material from the armature core to achieve a balanced rotor with the added advantage that the material is not actually added or removed and can be further adjusted if it is incorrectly adjusted initially. It also allows considerably finer adjustments to be made than can be achieved with a cutting wheel.

Thus, according to one aspect of the invention, there is provided a rotor for a miniature motor comprising a shaft, a stack of armature laminations including two end laminations mounted on the shaft and forming armature poles, a commutator mounted on the shaft adjacent one end of the armature stack, armature windings wound around the armature poles and connected to the commutator, and balancing means for balancing the rotor wherein, the balancing means comprises projections provided on each end lamination adjacent the radially outer periphery of the armature core. Preferably, the projections extend substantially axially and are arranged to be deformed or bent radially to achieve the desired degree of balance.

With the prior art rotors, it is extremely difficult to achieve accurate balance, especially in miniature motors. For example, in a three slot 12 mm diameter motor, the rotor diameter is 8 mm and may be 19 mm long with a shaft diameter of 1.5 mm. It is typical for such a motor to have an initial unbalance of 70-80 mg-mm. By adding balancing putty, this initial unbalance can be reduced to 30 mg-mm but it requires great skill and time to reduce the unbalance to less than 20 mg-mm. The material removal method even when using a 3 mm cutter is not considered suitable for use on such a small motor. However, when using the material removal method on a 17 mm diameter rotor, balance within 100 mg-mm is considered acceptable.

Certain applications today, such as small camera motors, require miniature motors balanced within 20 mg-mm and preferably between 10 and 15 mg-mm. This fine balancing of the rotors is not easily achieved by known balancing methods. However, this can be achieved using the present invention by bending the axially extending projections radially inward until the rotor is balanced. The force required to bend the balancing projections would be greater than the centrifugal force developed at maximum speed of the motor. To avoid shaft damage, the rotor could be supported during the bending operation. The force required to bend the projections can be adjusted by providing fold lines or areas of reduced material such as "necked" portions to assist bending at predetermined locations.

The end laminations may have a projection on each armature pole section to provide good circumferential coverage although for a rotor with a large number of slots, the balancing projections may be appropriately spaced and not necessarily on each armature pole section.

Each balancing projection maybe divided into a plurality of fingers. This reduces the bending force required to bend the balancing projection and also allows finer adjustments to be made as each finger has a lower mass and bending just one or two fingers five millimeters may be equivalent to bending the entire projection one millimeter.

The armature laminations are generally stamped from a sheet of material and it is convenient that the balancing projections are formed when the end laminations are stamped. The end laminations may be formed from brass or other material of suitable thickness to provide balancing projections of sufficient weight. However, it is advantageous if the end laminations are formed from lamination steel, the same material as the rest of the armature lamination to enhance the magnetic coupling between the field magnets and the rotor by utilizing the balancing projections as flux collectors.

According to a second aspect of the invention, there is provided a method of balancing a rotor for a miniature motor, the rotor having a shaft, an armature core formed from a stack of laminations including two end laminations fitted to the shaft, an armature winding wound around the armature core and terminated on segments of a commutator fitted to the shaft, the method comprising the steps of providing projections on the end lamination which extend from a region near the radially outer periphery of the armature core, and deforming at least a part of one projection radially to balance the rotor.

Preferred embodiments of the invention will now be described by way of example only with reference to the accompanying drawings in which:

### Brief Description of the Drawings

Figure 1 is a partial sectional view of a motor incorporating a rotor with balancing means according to the invention;
Figure 2 is a perspective view showing part of the rotor and balancing means of the motor of Figure 1;
Figure 3 is an end view showing part of the balancing means of Figure 2;
Figure 4 is a similar view to Figure 3 of an alternative embodiment;
Figure 5 illustrates part of an end lamination of the rotor incorporating part of the balancing means shown during formation;
Figure 6 is a similar view to Figure 5 showing a further embodiment; and
Figure 7 illustrates an end lamination of the rotor incorporating balancing means according to another embodiment.

### Detailed Description of the Preferred Embodiments

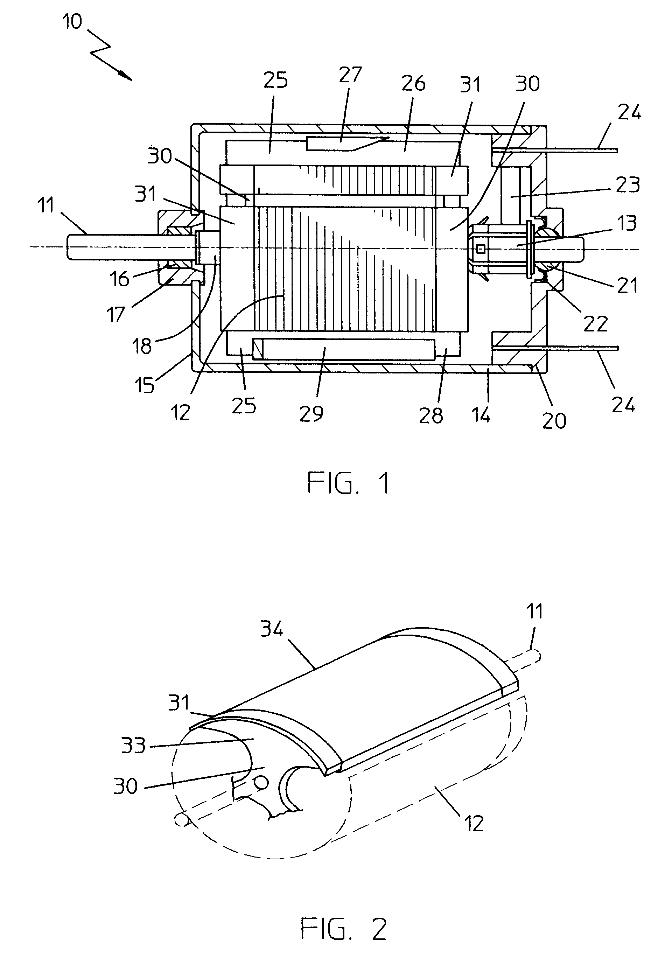

Referring to Figure 1, a small fractional horsepower permanent magnet direct current motor is illustrated in partial section. A motor comprises a motor shaft 11 which carries an armature core 12 around which armature windings are wound. The armature windings have been omitted from the drawings for clarity but are well known in the art. The shaft also carries a commutator 13. The commutator 13 and armature core 12 are mounted fast on the shaft and the armature is wound and connected to the commutator in a manner generally known in the art.

The shaft 11 is mounted in a cylindrical can like metal casing 14. The casing has one closed end 15 which carries a bearing 16 in a bearing retainer 17. A plastics end cap 20 typically of nylon houses a bearing 21 which is held in place by a bearing retainer washer 22. The shaft 11 is journalled in the bearings 16 and 21. The end cap supports brush gear comprising a pair of finger leaf brushes 23 (only one is shown) which bear against the commutator 13 to connect the commutator to power supply terminals 24.

The casing 14 carries two permanent magnets 25 (only one is shown) which each bear at one axial edge 26 against a respective tang 27 formed in the casing and are urged apart at their other axial edge 28 by a U-shaped spring 29.

The construction thus far described is well known in the art of manufacturing small p.m.d.c. motors.

The rotor which comprises the armature core 12, the armature windings, the commutator 13 and shaft 11, also incorporates means for balancing the rotor. It is important that the rotors of motors are balanced as any imbalance in the rotor leads to noisy operation and may lead to premature failure of the bearings. However, in miniature motors it is generally the unbalance vibration which is of prime concern and because of the speed at which the rotor rotates, the rotor needs to be balanced using a dynamic balancing technique. Methods of checking the balance of a rotor and locating the light or heavy portions are well known and will not be discussed here.

The armature core 12 is made up of a plurality of armature laminations beginning and finishing with respective end laminations 30. Each end lamination has a number of projections 31 extending axially from a region adjacent the outer peripheral surface 34 of the armature core. The armature core has a number of poles corresponding to the configuration of the armature, i.e., three poles for a three slot armature, etc. Each armature lamination has a corresponding number of mushroom shaped pole pieces 33 which form the poles and the projections 31 are formed on these pole pieces. For simplicity in drawing, a three slot armature is illustrated and a projection is formed on each pole piece of the end laminations. For an armature with a large number of slots, it is not essential that each pole piece has a projection as long as the projections are spaced sufficiently to provide the balancing effect.

Figure 2 shows a single pole piece 33 with the projection 31 extending substantially axially from adjacent the peripheral surface 34 of the rotor. It can be seen that the projection 31 has a depression 35 where the projection has been bent radially inwards providing an example of how the projections could be deformed to balance the rotor. Generally, one or two projections would be required to be deformed to achieve balance.

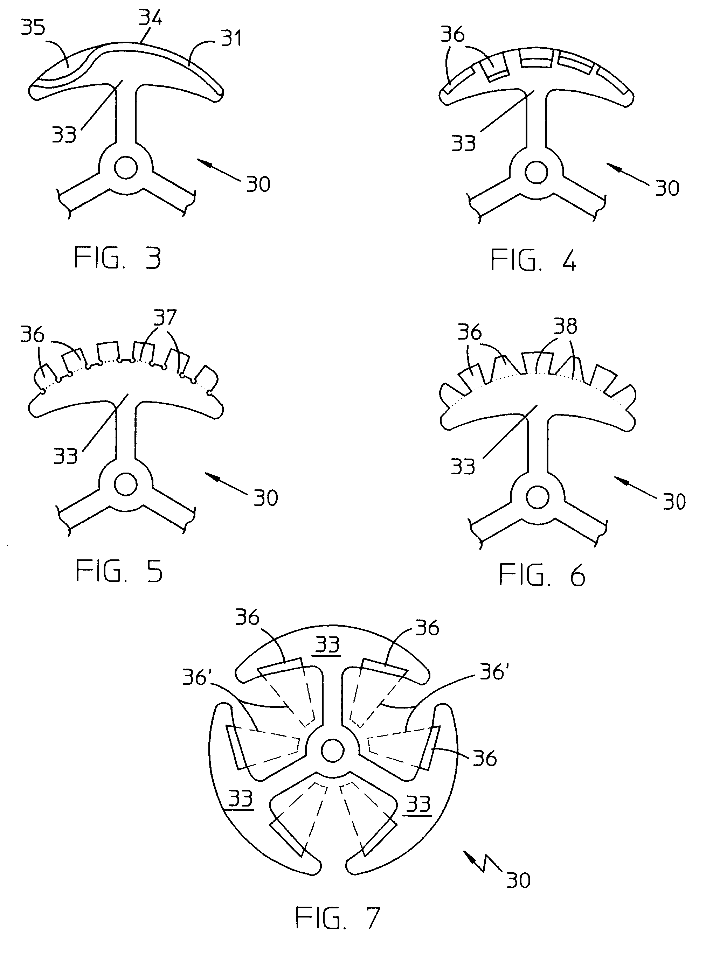

Figure 4 is a similar view to Figure 3 but showing an embodiment in which the projection 31 is formed as a series of fingers 36. The embodiment shows the projection divided into five fingers 36 with two fingers left undeformed, one finger slightly bent, the middle finger bent moderately and one finger bent even further, clearly illustrating that the degree of out of balance can be readily accommodated by the degree of bending of the fingers or the number of fingers being bent.

Figures 5 and 6 show a pole piece 33 of an end lamination during formation of the projection 31. The projections are formed when the end lamination 30 is stamped from a sheet of lamination steel and then bent or drawn during the stamping process to extend substantially at right angles to the plane of the lamination so that when fitted to the rotor, the projections extend axially. In Figure 5 the projections are formed as a plurality of rectilinear projections joined to the head of the pole piece by small necked portions 37 to encourage bending of the fingers at predetermined locations.

In Figure 6 the projection has been divided into a number of tapered fingers with alternate fingers tapering in the opposite direction. This provides a greater control in the adjustment as bending a tapered finger will provide a lesser adjustment than bending an inversely tapered finger the same distance. The projection has a fold line 38 formed at the root of the fingers. The fold line is formed as a line of reduced material thickness to encourage bending about the fold line.

Figure 7 illustrates an end lamination 30 in which the projections are formed as two fingers 36 pressed from the area of the lamination which is normally removed to form the winding tunnels in the armature core. Phantom outlines 36' illustrate the position of the fingers prior to forming. This has the advantage that the balancing fingers are formed from otherwise scrap material and thus no additional material is required to form the balancing fingers.

Thus it can be seen that the present invention provides a very simple but effective method of balancing a rotor for a miniature motor because material is neither added nor removed from the armature core but small projections are simply bent radially inwards to simulate material removal. The rotor is placed in a dynamic balancing machine to determine areas of excess weight (or insufficient weight) and the corresponding balancing fingers or portions are radially deformed or bent accordingly. The degree of bending can be monitored easily and if overbending occurs, it can be rebent to achieve the desired result. Thus, accurate balancing within fine tolerances is possible. In the embodiments shown, the rotor is axially inserted into the motor casing between the field magnets and thus it is necessary that the projections extend axially and are deformed radially inwardly so that the projections do not extend radially substantially greater than the outer peripheral surface of the armature core. If the rotor is not fitted to the motor by axially sliding the rotor between the field magnets, then the projections may not be required to extend axially with radially inward adjustment, i.e., the projections could extend radially adjacent the axial ends of the field magnet or extend axially and bent radially outwardly to achieve the desired degree of balance.

## Claims

1. A rotor for a miniature motor comprising:
a shaft (11);
a stack of armature laminations including two end laminations (30) mounted on the shaft (11) and forming an armature core (12) having a plurality of armature poles (33);
a commutator (13) mounted on the shaft (11) adjacent one end of the armature core (12);
armature windings wound around the armature poles (33) and connected to the commutator (13); and
balancing means for balancing the rotor, characterised in that the balancing means comprises projections (31) provided on each end lamination (30) adjacent the radially outer periphery (34) of the armature core.

2. A rotor for a miniature motor as defined in Claim 1 wherein the end laminations (30) have at least one said projection (31) on each armature pole (33) and each projection (31) extends substantially axially and is arranged to be deformed radially.

3. A rotor as defined in Claim 1 or 2 wherein each projection (31) is divided into a plurality of fingers.

4. A rotor as defined in any one of the preceding claims wherein the projections (31) are formed when the end laminations (30) are stamped from a sheet of material.

5. A rotor as defined in Claim 4 wherein the sheet of material is a sheet of lamination steel.

6. A rotor as defined in any one of the preceding claims wherein the projections (31) have an area of reduced cross section (37, 38) to assist bending at a predetermined location.

7. A miniature permanent direct current motor comprising:
a housing having end walls supporting bearings (16) and accommodating a permanent magnet stator; a rotor disposed within the permanent magnet stator and having a shaft (11) journalled in the bearings (16) and a commutator (13) and an armature fitted to the shaft (11), the armature comprising an armature core (12) formed from a stack of stamped laminations, including two end laminations (30), and having a plurality of armature poles (33), and an armature winding wound around the armature poles and connected to the commutator;
two motor terminals (24) electrically connected to brush gear including brushes (23) adapted for sliding contact with the commutator (13), for supplying electrical power to the armature winding; characterised by
balancing means in the form of deformable projections (31) formed on the end laminations (30) and extending substantially axially for balancing the rotor.

8. A method of balancing a rotor for a miniature motor, the rotor having a shaft, a commutator (13) mounted on the shaft (11), an armature core (12) formed from a stack of laminations including two end laminations (30) fitted to the shaft (11), each end lamination (30) having a plurality of projections (31) which extend from a region near the radially outer periphery (34) of the armature core (12), and an armature winding wound around the armature core (12) and terminated on the commutator (13), the method comprising;
placing the rotor in a dynamic balancing machine and determining the area of excess weight, making balancing adjustments by radially deforming at least part of one projection and rechecking the balance of the rotor as required,
characterised in that the balancing step includes deforming radially at least part of one projection to balance the rotor.

9. The method of Claim 8 wherein the projections (31) before balancing extend substantially parallel to the shaft (11) and the method is further characterised by deforming at least part of one projection, radially inwardly.
